# EUROPÄISCHE PATENTSCHRIFT

(11) **EP 0 449 398 B1**
(45) Veröffentlichungstag und Bekanntmachung des Hinweises auf die Patenterteilung: **26.05.1993**
(21) Anmeldenummer: 91250084.0
(22) Anmeldetag: 22.03.1991
(51) Int. Cl.: B01J 8/38, B01J 8/28

(54) **Verfahren zum kontinuierlichen Behandeln von feinstteiligen Stoffen mit Gasen in Wirbelbetten und Reaktor zur Durchführung dieses Verfahrens**
Process for the continuous treatment of very finely divided substances with gases in fluidized beds, and reactor for the implementation of this process
Procédé pour le traitement continu de matières très finement divisées avec des gaz dans des lits fluidisés et réacteur pour la mise en oeuvre de ce procédé

(30) Priorität: 27.03.1990 DE 4009766
(43) Veröffentlichungstag der Anmeldung: 02.10.1991
(73) Patentinhaber: Grace GmbH, D-22844 Norderstedt (DE)
(72) Erfinder: Flemmert, Gösta, Dr., F-06500 Menton (FR)
(74) Vertreter: UEXKÜLL & STOLBERG

(56) Entgegenhaltungen:
- DE-A- 3 828 941
- FR-A- 2 189 114
- US-A- 2 676 668

## Beschreibung

The invention relates to a process for the continuous treatment of very finely divided substances with a gas or a gas-mixture in fluidized beds and also to a device suitable for the implementation of the process.

There is a requirement in the chemical industry for the treatment with gases of very finely divided substances with an average (weight average) particle size of about 0.005 to 10 µm. Examples of such processes are the drying and heating of pigments, such as, for example, titanium dioxide or iron oxides, the treatment with superheated steam or with air of oxides produced by pyrogenic methods (for example, by flame-hydrolysis) for the elimination of residual chlorine or fluorine, or the treatment of oxides produced by pyrogenic methods with vapours of organic compounds, such as, for example, chlorosilanes or alcohols.

Considerable difficulties arise when conventional methods are used for bringing very finely divided substances into contact with gases. If, for example, the finely divided substances are treated with gases in a rotary drum or in a spray-drying tower, the amount of solids entrained by the gas when it leaves the reactor is relatively high unless an extremely low gas velocity is selected. This means that the capacity of the device is low and that large amounts of solids must be recycled into the reactor.

Good results can be achieved in the batchwise treatment of very finely divided substances in a fluidized bed. Here, the contact between the gas and the solid substance is good, resulting in a good transfer of material and heat. Furthermore, the amount of solids entrained by the gas is relatively low.

If, however, one changes to continuous processes with several beds and the operation is carried out in counter-flow, then difficulties arise. The fluidized-bed process is normally carried out in a vertical reactor in the following manner. The gas serving to create the turbulence is introduced at the base of the reactor and distributed evenly over the cross-section of the reactor with the aid of perforated or porous plates. After passing through the reactor, the gas is led away at the head of the reactor. The solid substance is introduced from above and removed from the reactor at the base. The gas velocity is chosen to be such that the solid substance is whirled up, and it normally corresponds to a velocity of 150 to 700 mm/s, relative to the free cross-section (linear velocity).

In the whirled-up state the solid particles move freely and quickly inside the bed. This means that even if the solid substance is fed into the reactor at the top and removed at the base, there is no notable counter-flow. In many cases it is, however, important for the reaction to run its full course, as far as possible. This can be achieved by providing the reactor with one or more internal plate trays which divide the reactor into two or more fluidized beds. The trays allow the gas to pass upwards through the reactor, while the solid substance can only move within each fluidized bed. Down-spouts are generally used to convey the solid substance from one bed to the next. The solid substance moves from one fluidized bed to the one below, depending on the height of the column and the density in the down-spouts.

By means of the internal trays and the down-spouts as described above, it is possible to obtain a counter-flow between the beds even when the current within each fluidized bed is predominantly a cross-flow.

For solids or granulated substances with a particle size of 0.05 to 5 mm or more, the method described above using down-spouts works well. If, however, the same procedure is applied to very finely divided substances with an average particle size of less than 0.01 mm, then difficulties occur. The linear velocity must be reduced to 20 to 200 mm/s to whirl up these substances. In spite of this low velocity, the density of the whirled-up product falls to 3 to 15 kg/m³ depending on the particle size and specific weight of the whirled-up product. The transportation of the solid substances from one floor to the next no longer functions if down-spouts are used, probably due to the extremely low density of the whirled-up, very finely divided substances.

From US-PS 2 676 668 a process is known wherein the down spouts are equipped with a valve mechanism, which opens, when the weight of the solids collected therein is great enough to press a sealing cap downwards. This process requires relatively coarse and heavy particles. In case very finely divided solids with extremely low density are used the particles instead of falling down through the down-spouts onto the next fluidized bed are entrained by the gas which goes upwards through the pipes when the sealing cap opens. This opening of the sealing cap occurs very unreliably, because of the extremely low density.

In the process described in DE-OS 38 28 941 down-spouts are used for the transfer of solids to the next lower tray, too. The process is used for steam treatment of relatively coarse grain. A rotating device is employed in order to transport the grain to the down-spout leading to the tray below. When the grain reaches the down-spout it falls through because of its weight. The down-spouts are entitled "cell valves" and can be equipped with a type of controllable mechanical seal. When using this process for very finely divided substances with a very low density difficulties arise as described above.

In DE-AS 11 49 336 another process for treating powderous goods is described. The fluidized bed reactor used therein has several perforated trays the gaps of which leading to the next lower tray are alternatively located centrally or peripherically. The trays with the peripherical gaps are fixed at a rotatable middle axis. When using this device for very finely divided solids there again is the problem that the extremely light particles will not be transferred sufficiently to the next lower tray due to the ascending gas stream.

It is an object of the invention to improve the known methods and devices such that not only finely divided substances can be treated which have a particle size of 0.05 to 5 mm but also very finely divided substances which have a particle size below 0.01 mm, in particular of 0.005 to 10 µm.

It has been found that this problem can be solved without using down-spouts by whirling up the very finely divided substance on two or more perforated plates, e.g. simple swage blocks, in whose holes the gas velocity is so high that the very finely divided substances cannot fall through by themselves but are conveyed further when stirring means are present which, for example, have stirring arms, which pass over the trays.

The invention provides a process for continous treatment of particulate solid substances with a gaseous medium in a counter-flow fluidized bed reactor, wherein the particulate solid substance is fluidized on several perforated trays, which are arranged one above the other in the reactor, with the gaseous medium in a counter-flow, such that the gas velocity in the holes of the trays is so great, that the solids cannot fall by themselves through the holes, and the particulate solid substance is conveyed through the perforations of the trays with the help of a stirring device having arms which rotate above each of the individual trays.

Furthermore the invention provides a reactor for the implementation of said process comprising a gas supply line at the base and a gas discharge line at the head of the reactor and also with a solids inlet at the head and a solids outlet at the base of the reactor and at least two trays arranged one above the other and permeable for the treatment gas, and a vertical rotating axis with lateral stirring arms, which are arranged above the surface of the trays in the elongated, upright reactor, and the trays are formed as simple swage blocks (6) with a hole diameter between 5 and 40 mm and with the total area of the holes constituting from 10 to 40% of the tray area.

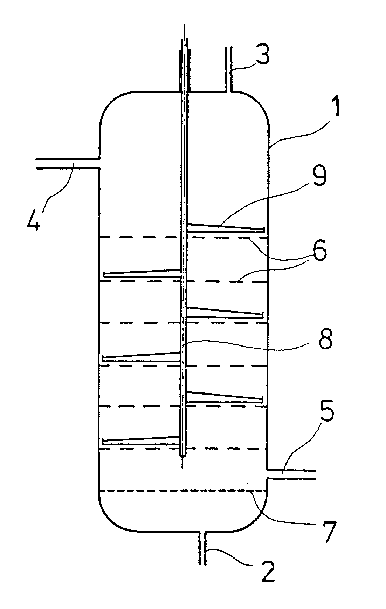

The attached figure, which shows a diagrammatic sectional representation of a reactor according to the invention, is to provide a more detailed explanation of the invention.

The very finely divided solids to be treated are fed into the vertically arranged reactor 1 from the top through the inlet 4. The reactor 1 contains two or more fluidized beds. Each bed is situated on a perforated tray 6 which is a simple swage block. The diameter of the holes in the trays 6 can vary between 5 and 40 mm, but is normally 10 to 20 mm, preferably 10 to 15 mm. The total area of the holes can constitute between 10 and 40 %, preferably 20 to 30 % of the area of the tray. At the base of the reactor a porous gas distributing plate (7) is present which can consist of a porous substance, e.g. a sintered metal or sintered ceramics, or can also be a perforated plate such as a simple sevage block. In this gas distributing plate 7 it is suitable for the holes to have a diameter of 0.2 to 4 mm, and the total area of the holes constitutes not more than 0.1 to 5 % of the plate area. In the centre of the reactor there is a shaft 8 which is provided with arms 9 which pass over the upper surface of the trays 6 at a distance of about 2 to 100 mm.

The arms 9 preferably are shaped lamellar and are attached to the shaft 8 such that their blade areas are lateral and vertical or bent angied. It is preferred that the stirring arm blades are bent at an angle to the axis such that the upper edge of the stirring arms juts out compared with the lower edge in the direction of rotation. The stirring arms optionally can be equipped with brushes or the like.

The speed of rotation of the stirring arms 9 can be from 0.5 to about 30 rpm. The higher the speed of rotation, the more solid substance falls from one floor to the next. Optimum operation is achieved when the same amount of solid substance falls through each tray as is fed into the reactor from the top. If the speed of rotation is too low, the level of the whirled-up substance rises and after some time the reactor will be overloaded. If on the other hand the speed of rotation is too high, solids from a lower floor can be re-mixed with those from a higher floor, which likewise results in a drop in efficiency.

The solids are drawn off continuously from the reactor 1 above the gas distributing plate 7 through the outlet 5. The number of trays can vary depending on the reaction velocity and the desired degree of reaction completion. Two to ten trays are generally used.

The gas is introduced into the reactor at the base through a gas supply line 2 and is distributed evenly over the cross-section of the reactor 1 by means of the gas distributing plate 7.

After passing through the fluidized beds the gas leaves the reactor at its head through the gas outlet 3.

The gas velocity is chosen so that good turbulence is achieved, which corresponds to about 20 to 200, preferably 30 to 100 mm/s. If the velocity is too low the fluidized beds settle, and if the velocity is too high the upper interface of each fluidized bed is no longer defined and the amount of particles which are entrained by the gas leaving the reactor increases. When optimum turbulence conditions are applied, the amount of solid substance entrained by the gas is low and can be further reduced by connecting a cyclone separator and/or a filter into the gas outlet and recycling the separated solids into the reactor. The velocity is markedly higher in the tray holes and is between 80 and 800 mm/s.

It is surprising that substances with particle sizes down to 0.005 µm can be whirled up without greater solid substance losses occurring. The reason for this can probably be found in the formation of agglomerates by the primary particles through mechanical, electrical and/or van der Waals' forces and the fact that in reality it is these agglomerates which are whirled up.

The following examples are for the further explanation of the invention.

### Example 1

Pyrogenic silicic acid, obtained by the hydrolysis of silicon tetrafluoride in a hydrogen flame, had an average particle size of 0.011 µm, a specific surface (BET) of 245 m²/g and a residual fluorine content of 2.8 %. To reduce the fluorine content to less than 100 ppm, the silicic acid was treated with superheated steam as in the method known per se from US-A-3 053 627.

The defluorination was carried out in a vertical cylindrical reactor with a diameter of 4.0 m and a total height of 12 m. The reactor had 6 trays. The trays were perforated and contained holes with a diameter of 13 mm, such that the total area of the holes constituted 26 % of the tray area. Plate 7 was also perforated, but the holes had a diameter of only 1.5 mm, and in this case the total area of the holes constituted 0.6 % of the plate area.

The reactor was very well heat-insulated and fitted with a stirring device which was positioned in the centre of the reactor and had arms which rotated at a distance of 30 mm above each tray.

208 kg/h of a silicic acid containing residual fluorine was fed continuously into the head of the reactor and 500 kg/h of superheated steam at a temperature of 770°C was introduced into the base of the reactor. Under these conditions, the linear velocity of the steam was 51.8 mm/s and the turbulence created was excellent.

The stirring device was operated at a speed of 6 r.p.m. Under these conditions, 203 kg/h of silicic acid was drawn off at the base of the reactor. The fluorine content of the product was 64 ppm and the product was hydrophilic and storage-stable. The defluorinated silicic acid which was obtained using this process had practically the same good thickening properties as the input substance.

### Example 2

Pyrogenic silicic acid with a particle size of 0.012 um, a specific surface (BET) of 208 m²/g and a residual fluorine content of 52 ppm was continuously treated with dimethyldichlorosilane vapour. The reaction was carried out in a vertical cylindrical reactor with a diameter of 2 m, a total height of 7.5 m and 4 internal trays. The trays and the gas distributing plate were perforated in the same way as those described in Example 1. The reactor was, in addition, fitted with a stirring device of the same type which revolved at a speed of 8 r.p.m.

96 kg/h of silicic acid was fed into the reactor from above, and 125 kg/h dimethyldichlorosilane vapour which was heated to 200°C was introduced from below. The above conditions result in a linear velocity of 9 mm/s and good turbulence of the silicic acid.

97 kg/h of surface-treated silicic acid was removed from the base of the reactor. The product contained 1.8 % methyl groups and was completely hydrophobic.

## Patentansprüche

1. Verfahren zum kontinuierlichen Behandeln von teilchenförmigen Feststoffen mit einem gasförmigen Medium in einem Gegenstrom-Wirbelschichtreaktor, bei dem der teilchenförmige Feststoff auf mehreren im Reaktor übereinander angeordneten perforierten Böden mit dem im Gegenstrom geführten Medium fluidisiert wird, wobei die Gasgeschwindigkeit in den Löchern der Böden so groß ist, daß der Feststoff nicht von selbst durch die Löcher fallen kann, dadurch gekennzeichnet, daß der teilchenförmige Feststoff mittels eines Rührwerks, das Arme aufweist, die oberhalb der einzelnen Böden umlaufen, durch die Löcher der Böden gefördert wird.

2. Verfahren nach Anspruch 1, dadurch gekennzeichnet, daß die Rührarme mit bestand über der Oberfläche der Böden umlaufen.

3. Verfahren nach Anspruch 1 oder 2, dadurch gekennzeichnet, daß die Rührarme in einem Abstand von 2 bis 100 mm über der Oberfläche der Böden umlaufen.

4. Verfahren nach einem der Ansprüche 1, 2 oder 3, dadurch gekennzeichnet, daß die Rührarme mit einer Geschwindigkeit von 0,5 bis 30 UpM umlaufen.

5. Reaktor zur Durchführung des Verfaherns gemäß einem der Ansprüche 1 bis 4 mit einer Gaszuleitung am Fuß und einer Gasableitung am Kopf des Reaktors, einem Feststoffeinlaß am Kopf und einem Feststoffauslaß am Fuß des Reaktors sowie mindestens zwei übereinander angeordneten für das Behandlungsgas durchlässigen Böden und einer senkrechten Drehachse mit seitlichen Rührarmen, die über der Oberfläche der Böden in dem länglichen, senkrecht stehenden Reaktor angeordnet sind, dadurch gekennzeichnet, daß die Böden als einfache Lochplatten (6) mit einem Lochdurchmesser zwischen 5 und 40 mm ausgebildet sind, wobei die Gesamtfläche der Löcher 10 bis 40 % der Bodenfläche ausmacht.

6. Reaktor nach Anspruch 5, dadurch gekennzeichnet, daß der Abstand zwischen der Oberfläche der Böden (6) und den Rührarmen (9) jeweils 2 bis 100 mm beträgt.

7. Reaktor nach Anspruch 5 oder 6, dadurch gekennzeichnet, daß die Rührarme (9) gegenüber der Achse (8) derart angewinkelt sind, daß die Oberkante der Rührarme gegenüber ihrer Unterkante in Laufrichtung übersteht.

8. Reaktor nach Anspruch 5, 6 oder 7, dadurch gekennzeichnet, daß unten im Reaktor (1) eine poröse Gasverteilerplatte (7) vorgesehen ist, deren Löcher einen Durchmesser von 0,2 bis 4 mm aufweisen, wobei die Gesamtfläche der Löcher 0,1 bis 5 % der Plattenfläche ausmacht.

## Claims

1. Process for continous treatment of particulate solid substances with a gaseous medium in a counter-flow fluidized bed reactor, wherein the particulate solid substance is fluidized on several perforated trays, arranged one above the other in the reactor, with the gaseous medium in a counter-flow, such that the gas velocity in the holes of the trays is so great, that the solids cannot fall by themselves through the holes, **characterized in that** the particulate solid substance is conveyed through the perforations of the trays with the help of a stirring device having arms which rotate above each of the individual trays.

2. Process according to Claim 1 **characterized in that** the stirring arms rotate at a distance above the surface of the trays.

3. Process according to Claim 1 or 2, characterized in that the stirring arms rotate at a distance of 2 to 100 mm above the surface of the trays.

4. Process according to Claims 1, 2 or 3, **characterized in that** the stirring arms rotate at a speed of 0.5 to 30 rpm.

5. Reactor for the implementation of the process according to one of Claims 1 to 4 comprising a gas supply line at the base and a gas discharge line at the head of the reactor and also with a solids inlet at the head and a solids outlet at the base of the reactor and at least two trays arranged one above the other and permeable for the treatment gas, and a vertical rotating axis with lateral stirring arms, which are arranged above the surface of the trays in the elongated, upright reactor, **characterized in that** the trays are formed as simple swage blocks (6) with a hole diameter between 5 and 40 mm and with the total area of the holes constituting from 10 to 40% of the tray area.

6. Reactor according to claim 5, characterized in that the distance between the surface of the trays (6) and the stirring arms (9) is 2 to 100 mm in each case.

7. Reactor according to Claims 5 or 6, **characterized in that** the stirring arms (9) are bent at an angle to the axis (8) such that the upper edge of the stirring arms juts out compared with the lower edge in the direction of rotation.

8. Reactor according to Claims 5, 6 or 7, **characterized in that** at the bottom of the reactor (1) a porous gas distributing plate (7) is provided, the holes of which have a diameter of 0.2 to 4 mm and the total area of the holes constituting from 0.1 to 5% of the plate area.

## Revendications

1. Procédé de traitement continu de substances solides particulaires à l'aide d'un milieu gazeux dans un réacteur à lit fluidisé à contre-courant, dans lequel la substance solide particulaire est fluidisée sur plusieurs plateaux perforés qui sont agencés l'un au-dessus de l'autre dans le réacteur, à l'aide du milieu gazeux dans un contre-courant, de façon que la vitesse du gaz dans les trous des plateaux soit tellement grande que les solides ne puissent tomber par eux-mêmes à travers les trous, caractérisé en ce que la substance solide particulaire est transportée à travers les perforations des plateaux à l'aide d'un dispositif agitateur comprenant des bras qui tournent au-dessus de chacun des plateaux individuels.

2. Procédé suivant la revendication 1, caractérisé en ce que les bras agitateurs tournent à une certaine distance au-dessus de la surface des plateaux.

3. Procédé suivant la revendication 1 ou 2, caractérisé en ce que les bras agitateurs tournent à une distance de 2 à 100 mm au-dessus de la surface des plateaux.

4. Procédé suivant la revendication 1, 2 ou 3, caractérisé en ce que les bras agitateurs tournent à une vitesse de 0,5 à 30 tours par minute.

5. Réacteur pour la mise en oeuvre du procédé suivant l'une quelconque des revendications 1 à 4, qui comprend une conduite d'admission de gaz à la base et une conduite d'évacuation de gaz à la tête du réacteur, de même qu'une admission de solides à la tête et une sortie de solides à la base du réacteur et au moins deux plateaux agencés l'un au-dessus de l'autre et perméables pour le gaz de traitement, outre un arbre rotatif vertical avec des bras agitateurs latéraux qui sont agencés au-dessus de la surface des plateaux dans le réacteur vertical oblong, caractérisé en ce que les plateaux sont façonnés sous forme de simples flans matricés (6) avec un diamètre des trous entre 5 et 40 mm et avec une surface totale des trous constituant 10 à 40% de la surface des plateaux.

6. Réacteur suivant la revendication 5, caractérisé en ce que la distance entre la surface des plateaux (6) et les bras agitateurs (9) est de 2 à 100 mm dans chaque cas.

7. Réacteur suivant la revendication 5 ou 6, caractérisé en ce que les bras agitateurs (9) sont infléchis d'un certain angle par rapport à l'arbre (6), de façon que le bord supérieur des bras agitateurs vienne en surplomb du bord inférieur dans le sens de la rotation.

8. Réacteur suivant la revendication 5, 6 ou 7, caractérisé en ce qu'il est prévu au fond du réacteur (1) une plaque poreuse distributrice de gaz (7), dont les trous ont un diamètre de 0,2 à 4 mm et dont la surface totale des trous constitue 0,1 à 5% de la surface de la plaque.
